# EUROPÄISCHE PATENTANMELDUNG

(11) **EP 2 679 506 A1**
(43) Veröffentlichungstag der Anmeldung: **01.01.2014**
(21) Anmeldenummer: 13003066.1
(22) Anmeldetag: 14.06.2013
(51) Int. Cl.: B65C 9/18

(54) **Etikettentransportband**

(30) Priorität: 26.06.2012 DE 102012012725
(71) Anmelder: MULTIVAC Marking & Inspection GmbH & Co. KG, 32130 Enger (DE)
(72) Erfinder: Frank, Hendrik, 32130 Enger (DE); Siegenbrink, Daniel, 33617 Bielefeld (DE)
(74) Vertreter: Grünecker, Kinkeldey, Stockmair & Schwanhäusser

(57) **Zusammenfassung**

Die Erfindung betrifft ein Etikettentransportband (1) mit einem Trägermaterial (5). Es zeichnet sich dadurch aus, dass eine nano- oder mikrostrukturierte Beschichtung (6) auf einem Trägermaterial (5) des Etikettentransportband (1) vorgesehen ist.

## Beschreibung

Die Erfindung bezieht sich auf ein Etikettentransportband mit den Merkmalen des Anspruchs 1.

Aus der WO 03/099951 A2 ist eine mikrostrukturierte Oberfläche mit gesteigerter Adhäsion bekannt, die eine Vielzahl von elastischen Vorsprüngen aufweist. Diese Oberfläche haftet nach der sogenannten Van-der-Waals-Wechselwirkung an anderen Objekten. Die DE 10 2010 044 660 A1 offenbart eine verbesserte Ausführung von Vorsprüngen, die die Anhaft- und die Ablöseeigenschaft weiter verbessert. Keines dieser beiden Dokumente hat jedoch irgendeinen Bezug zur Etikettiertechnik.

Die DE 10 228 243 A1 der Anmelderin selbst offenbart einen Querbahnetikettierer mit einem Saugkasten, der wenigstens einen Lüfter umfasst, der für einen Unterdruck am Etikettentransportband sorgt, um Etiketten mit ihrer nicht-klebenden Oberseite auf der Unterseite des Etikettentransportband beim Transport halten zu können. Lüfter sind aus hygienischen Gesichtspunkten nicht immer vorteilhaft.

Aufgabe der vorliegenden Erfindung ist es, ein Etikettentransportband mit verbesserten Hafteigenschaften zur Verfügung zu stellen.

Diese Aufgabe wird gelöst durch ein Etikettentransportband mit den Merkmalen des Anspruchs 1. Vorteilhafte Weiterbildungen der Erfindung sind in den Unteransprüchen angegeben.

Das erfindungsgemäße Etikettentransportband weist ein Trägermaterial auf und zeichnet sich dadurch aus, dass auf dem Trägermaterial eine nano- oder mikrostrukturierte Beschichtung aufgebracht ist, die dazu konfiguriert ist, wenigstens ein Etikett positionsgenau an der Beschichtung während des Transports des Etiketts zu halten. Positionsgenau bedeutet, dass sich die Position des Etiketts auch bei einer Beförderung durch das Etikettentransportband nicht durch Gewichtskräfte oder Trägheitskräfte in Bezug auf seine Lage gegenüber dem Etikettentransportband verändert. Unter einer nanostrukturierten Beschichtung wird im Sinne der Erfindung eine Beschichtung verstanden, die Oberflächenstrukturen mit Größen im Bereich von 100 nm oder kleiner aufweist. Unter einer mikrostruktierten Beschichtung wird eine Beschichtung verstanden, die Oberflächenstrukturen mit Größen im Bereich von 0,1 µm bis 100 µm aufweist. Bei diesen Oberflächenstrukturen kann es sich jeweils um die Durchmesser oder Krümmungsradien der Köpfe oder Spitzen von Haftelementen handeln.

Die durch die nano- oder mikrostrukturierte Beschichtung bereitgestellte Hafteigenschaft ermöglicht sowohl ein Anhaften von Etiketten mit ihrer klebenden, als auch mit ihrer nicht-klebenden Seite. Die Hafteigenschaft ermöglicht auch einen Transport von Etiketten auf der Unterseite eines Etikettentransportbands, ohne dass die Etiketten mittels Unterdruck an dem Etikettentransportband gehalten werden müssen.

In einer besonders vorteilhaften Ausführung weist die mikrostrukturierte Beschichtung des Etikettentransportbands eine Oberfläche mit mehr als 15.000 Haftelementen pro cm², vorzugsweise mehr als 25.000 Haftelementen pro cm², auf. Diese Ausführung ist besonders geeignet, um glatte Oberflächen, wie sie beispielsweise bei bedruckten Etiketten an ihrer Oberseite bzw. Sichtseite vorhanden sind, an der Beschichtung haften zu lassen. Gleichzeitig gewährt die Beschichtung ein leichtes Abgeben oder Ablösen von Etiketten mittels Abschälen, da die guten Hafteigenschaften vor allem quer und senkrecht zur Ebene der Beschichtung wirken.

Bevorzugt ist die Beschichtung eine Silikonbeschichtung und ist damit sowohl leicht reinigbar, als auch flexibel.

Das Trägermaterial ist in einer vorteilhaften Ausführung ein Gewebe, vorzugsweise ein Textilgewebe, um eine besondere Eignung zum Transportieren von Etiketten aufzuweisen.

Das Trägermaterial ist vorzugsweise mehrschichtig, um das Etikettentransportband auch um sehr kleine Durchmesser umlaufen zu lassen und/oder der Beschichtung eine entsprechende Oberfläche zum Aufbringen zur Verfügung stellen zu können.

Bevorzugt ist die Beschichtung dazu konfiguriert, das Etikett mit seiner nicht klebenden Seite während des Transportes des Etiketts zu halten. Die Bereitstellung von Unterdruck durch Lüfter kann entfallen und somit die Konstruktion vereinfachen. Eine Veränderung der Hafteigenschaft, die durch den Kleber der klebenden Seite der Etiketten bei einem Transport der klebenden Unterseite der Etiketten negativ beeinflusst werden würde, wird verhindert.

In einer vorteilhaften Ausführung ist das Etikettentransportband endlos, um beispielsweise in einem Querbahnetikettierer eingesetzt werden zu können.

Die Beschichtung ist bevorzugt dazu konfiguriert ist, das Etikett auf Basis von Van-der-Waals-Kräften zu halten, um ein gutes Haften und ein leichtes Ablösen der Etiketten zu gewährleisten.

Im Folgenden wird ein vorteilhaftes Ausführungsbeispiel der Erfindung anhand einer Zeichnung näher erläutert. Im Einzelnen zeigen:
- Fig. 1: eine erfindungsgemäßes Etikettentransportband und
- Fig. 2: eine vergrößerte Darstellung eines Querschnitts des Etikettentransportbands.

Gleiche Komponenten sind in den Figuren durchgängig mit gleichen Bezugszeichen versehen.

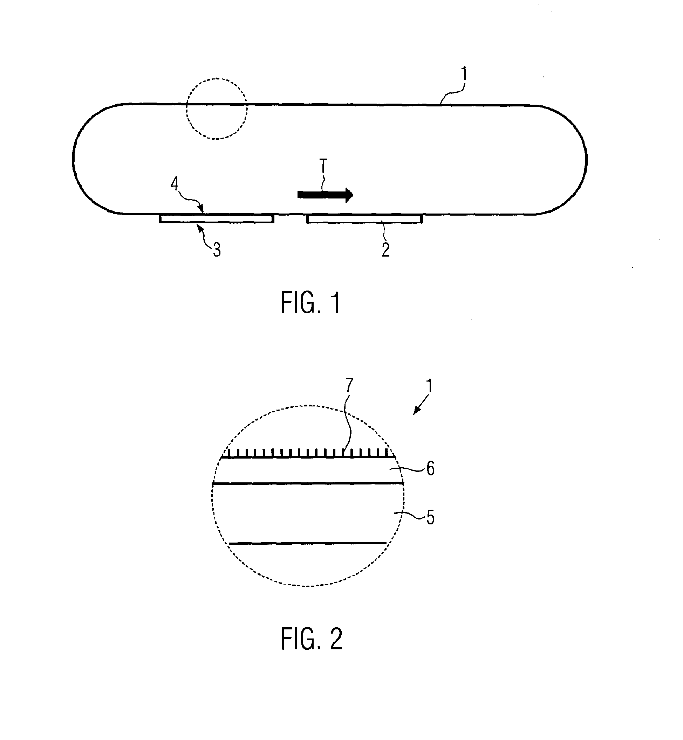

Fig. 1 zeigt ein erfindungsgemäßes endloses Etikettentransportband 1, das in einer Transportrichtung T Etiketten 2 transportiert. Dabei ist die klebende Seite 3 die Unterseite des Etiketts 2 und die nicht-klebende Seite 4 die dem Etikwttwntransportband 1 zugewandte Oberseite des Etiketts 2.

In der vergrößerten Darstellung eines Querschnitts des Etikettentransportbands 1, wie in Fig. 2 schematisch dargestellt, ist eine Trägerschicht 5 und eine mit der Trägerschicht 5 verbundene nano- oder mikrostrukturierte Silikonbeschichtung 6 schematisch dargestellt. Die Beschichtung ist dauerhaft beispielsweise vorgeformt und dann mittels Klebung aufgebracht oder durch Gießen, Formen oder Beschichten direkt auf dem Trägermaterial aufgebracht. Es sind Haftelemente 7 vorgesehen, um Etiketten auf Basis von Van-der-Waals-Kräften mit ihrer nicht-klebenden Seite halten zu können, wobei wenigstens 15.000 der Haftelemente 7 pro cm² in dem Bereich des Etikettentransportbands 1 vorgesehen sind, der für den Transport der Etiketten 2 vorgesehen ist.

Das Trägermaterial 5 kann ein Gewebe, beispielsweise ein Textilgewebe sein, oder mehrschichtig konfiguriert sein, um die Eigenschaften eines umlaufenden Riemens zu gewähren und zusätzlich eine verbesserte Oberfläche zum Aufbringen der Beschichtung 6 bereitzustellen.

## Patentansprüche

1. Etikettentransportband (1), das ein Trägermaterial (5) aufweist, **dadurch gekennzeichnet, dass** auf dem Trägermaterial (5) eine nano- oder mikrostrukturierte Beschichtung (6) aufgebracht ist, die dazu konfiguriert ist, wenigstens ein Etikett (2) positionsgenau an der Beschichtung (6) während des Transports des Etiketts (2) zu halten.

2. Etikettentransportband nach Anspruch 1, **dadurch gekennzeichnet, dass** die mikrostrukturierte Beschichtung (6) eine Oberfläche mit mehr als 15.000 Haftelementen (7) pro cm², vorzugsweise mehr als 25.000 Haftelementen (7) pro cm², aufweist.

3. Etikettentransportband nach einem der vorgehenden Ansprüche, **dadurch gekennzeichnet, dass** die Beschichtung (6) eine Silikonbeschichtung ist.

4. Etikettentransportband nach einem der vorgehenden Ansprüche, **dadurch gekennzeichnet, dass** das Trägermaterial (5) ein Gewebe, vorzugsweise ein Textilgewebe, ist.

5. Etikettentransportband nach einem der vorgehenden Ansprüche, **dadurch gekennzeichnet, dass** das Trägermaterial (5) mehrschichtig ist.

6. Etikettentransportband nach einem der vorgehenden Ansprüche, **dadurch gekennzeichnet, dass** die Beschichtung (6) dazu konfiguriert ist, das Etikett (2) mit seiner nicht-klebenden Seite (4) während des Transportes des Etiketts (2) zu halten.

7. Etikettentransportband nach einem der vorgehenden Ansprüche, **dadurch gekennzeichnet, dass** das Etikettentransportband (1) endlos ist.

8. Etikettentransportband nach einem der vorgehenden Ansprüche, **dadurch gekennzeichnet, dass** die Beschichtung (6) dazu konfiguriert ist, das Etikett (2) auf Basis von Van-der-Waals-Kräften zu halten.
